# EUROPEAN PATENT SPECIFICATION

(11) **EP 1 076 810 B1**
(45) Date of publication and mention of the grant of the patent: **01.06.2016**
(21) Application number: 99916420.5
(22) Date of filing: 06.04.1999
(51) Int. Cl.: A47J 31/54, G01F 11/28, A45D 34/00

(54) **INCREMENTALLY HEATED FLUID DISPENSER WITH NON-VOLATILE CONSTITUENT PARTS**
STUFENWEISE BEHEIZTE ABGABEVORRICHTUNG FÜR FLÜSSIGKEITEN MIT NICHT-FLÜCHTIGEN BESTANDTEILEN
DISTRIBUTEUR DE FLUIDE SANS CONSTITUANT VOLATIL, A CHAUFFAGE PROGRESSIF

(30) Priority: 06.04.1998 US 80935 P
(43) Date of publication of application: 21.02.2001
(73) Proprietor: S.C. Johnson & Son, Inc., Racine, WI 53403 (US)
(72) Inventor: KREITEMIER, Rickie F., Englewood, CO 80111 (US); GEBHARD, Albert W., Denver, CO 80209 (US); HACKETT, Kathleen A., Aurora, CO 80014 (US)
(74) Representative: Ruschke, Hans Edvard
(86) International application number: PCT/US1999/007540
(87) International publication number: WO 1999/051947

(56) References cited:
- US-A- 1 158 586
- US-A- 4 263 498
- US-A- 4 544 085
- US-A- 4 782 212
- US-A- 4 847 470
- US-A- 4 941 597
- US-A- 5 111 969
- US-A- 5 778 765

## Description

### FIELD OF THE INVENTION

This invention relates in general to heating and dispensing apparatus used for fluid which includes substantial non-volatile constituent parts and more specifically to a hot fluid dispenser which only heats a portion of the fluid before it is dispensed.

### BACKGROUND INFORMATION

Fluids such as body lotions and oils are commonly applied to the human skin to address dry skin problems, eczema and other skin disorders. These lotions are typically stored in containers at ambient air temperature and are applied to the body by means such as squirt bottles and hand pump dispensing apparatus. These lotion dispensers unfortunately produce the lotions at temperatures well below the normal skin temperature of the human body (i.e., somewhat less than 37 °C °). Not only is the application of body lotions at cool temperatures uncomfortable for infants, the elderly and the general user, the cooler temperatures prevent the lotion from adequately penetrating the pores of the skin since the cool temperature makes the skin pores constrict rather than open up to receive the body lotions.

Although attempts have been made to heat fluids prior to this application, these devices generally heat the fluids in mass in a bulk storage container. Over time, this process resulted in separation and breakdown of the natural composition of the body lotions or fluids, thus reducing their effectiveness. For example, the paraffins in some lotions tend to break down when heated to temperatures above 43,3 ° for extended periods of time. Further, the continual heating and cooling of the lotion causes a coagulation of the non-volatile components when the solvents evaporate which over time can clog the pumping or dispensing mechanism, as well as destroy a larger portion of the lotion, which is expensive. Additionally, the amount of time required to heat larger containers of body lotions is not practical for a user which prefers the lotion to be heated in a matter of minutes or seconds. Leaving lotion heated for extended periods of time can also cause bacteria, algae and other undesired microorganisms to grow in the lotion.

In addition to heating the bulk storage container, some have also applied heat to a dispensing tube of commercial pumps. Fluid in the dispensing tube can cool between uses, so heat is applied to this tube to avoid cooling. However, heating a small portion of the fluid can evaporate the solvent components in the fluid which makes the remaining fluid more viscous. Maintaining a desired viscosity is important to avoid potential clogging of the dispensing tube and/or otherwise ruining the fluid. The heat is applied to the storage container and dispensing tube continually. However, applying heat continually consumes costly energy and is impractical for a consumer unit which may only be required infrequently.

USA-1158586 describes an electric heating apparatus for heating liquids, having a liquid reservoir, and a percolator chamber.

### SUMMARY OF THE INVENTION

The present invention discloses a method and apparatus for quickly heating a predetermined volume of body lotion and dispensing the body lotion efficiently at a selected temperature. The predetermined volume of body lotion is housed in a predelivery chamber separate from the main fluid reservoir. The present invention is generally a portable device which may be operated manually, or more typically, electrically.

It is thus one object of the present invention to provide lotion heater assembly which heats the lotion in a short time period and in small volumes to prevent overheating and adversely effecting the lotion composition. Thus, in one aspect of the present invention, a heating element is coupled to the predelivery chamber as opposed to in a heating plate "jacket" or other device which heats the main fluid reservoir. The present invention heats only a predetermined volume of lotion in the predelivery chamber which is soon used by the consumer or masseuse applying the lotion. This avoids subjecting a volume of the lotion to heating over long periods of time.

It is another object of the present invention to provide a pumping assembly which either manually or automatically pumps a predetermined increment of lotion which has been spontaneously heated. In one aspect of the present invention, the heating element may be in operable contact with the predelivery chamber or dispensing spout to provide immediate heating of the lotion prior to dispensing.

It is another object of the present invention to provide a heated fluid pump which can be used with conventional lotions commonly purchased by the household consumers so as to not require unique and expensive compositions specialized for heating. Thus, the heating apparatus may be universally used with substantially all lotions currently sold over the counter. Conversely, specially formulated lotions specifically designed for heating may be sold either independently or in conjunction with the heated fluid pump.

Additionally, in another embodiment of the present invention a small container or tub with a predetermined volume of lotion may be sold which is designed to custom fit the interior of the heated fluid pump. This configuration allows the container or cup to be readily disposed of after use to avoid the need to clean or otherwise maintain the main fluid reservoir of the fluid pump. The cup, in one embodiment, may resemble a plastic cup with a foil cover, such as a yogurt cup, and the lotion may be exposed for use by either removing a pull tab cover or by piercing the foil cover with a sharpened suction tube at the bottom of the main fluid reservoir. A hole in the cup could be pierced by a sharp point on the inside of the lid so that pressure would not build in the cup.

Additionally, it is another object of the present invention to provide a thermostatically controlled heating element which assures the proper lotion temperature during all periods of use. Thermostatic control reduces the risk of malfunction which could overheat the lotion. Thus, the device is safe for infants, the elderly and for others especially sensitive to heated products. Additionally, the pumping and dispensing apparatus of the present invention creates a predetermined even flow of heated lotion which prevents waste or overuse.

The advantages of using heated lotions are numerous over applying cold lotions to the human body. The advantages include:
1) Heated lotions tend to penetrate the skin better. The human skin temperature is approximately 35 °C. If 23,9 °C or cooler ambient air temperature lotion is applied to 35 °C skin, the pores of the human body tend to close. However, if 48,9 °C lotion is applied the pores tend to open, allowing for better and deeper penetration of the lotion.
2) Heated lotions have lower viscosity than cooler lotion which allows for better penetration. Lotions with lower viscosity are thinner and thus easier to apply and penetrate the skin better than cooler lotions.
3) Heated lotions have less drag or friction when applied by a masseuse or the user because of the lower viscosity. This allows less pulling on the skin or stretching and is applied easier and in a more desirable fashion than cooler lotions.
4) Heated lotions are cost effective since less lotion is more efficiently absorbed and the user thus saves money. Additionally, heated lotions cover more area and leave less waste atop the skin to evaporate based on the higher penetration rates.
5) Heated lotions have a therapeutic affect on joint aches for people suffering from arthritis, sore muscles, over exertion, and other afflictions. Some of these therapeutic effects may be attributed to the sensual appeal of heated lotions.
6) Heated lotions feel better when applied to cold skin whereas cold lotions have a shocking effect to the skin, especially to infants and the elderly. Thus, the present invention eliminates the need of parents to try to warm lotions by hand rubbing before applying lotions to a baby or other person. Additionally, the portable heating apparatus alleviates the problem of parents attempting to heat lotions by submerging bottles in hot water or using heating elements like ovens or microwaves which may potentially overheat lotions and may burn the child.

Other objects, features and advantages of the invention will be apparent from the following specification taken in conjunction with the following drawings.

### BRIEF DESCRIPTION OF THE DRAWINGS

**Fig. 1** is a perspective view illustrating an embodiment of a lotion pump which allows selecting at least two set temperatures for heating the lotion;
**Fig. 2** is a right side elevational view showing the lotion pump of **Fig. 1****;**
**Fig. 3** is a left side elevational view showing the lotion pump of **Fig. 1****;**
**Fig. 4** is a front elevational view showing the lotion pump of **Fig. 1****;**
**Fig. 5** is a back elevational view showing the lotion pump of **Fig. 1****;**
**Fig. 6** is a top plan view showing the lotion pump of **Fig. 1****;**
**Fig. 7** is a bottom plan view showing the lotion pump of **Fig. 1****;**
**Fig. 8** is a side-sectional view depicting an embodiment of the lotion pump which has a check valve and a resistance type heat element;
**Fig. 9** is a block diagram of the electronics within an embodiment of the lotion pump;
**Fig. 10** is a side-sectional view showing an embodiment of the fluid conduit;
**Fig. 11** is a side view illustrating an embodiment of the check valve spring;
**Fig. 12** is a side-sectional view illustrating a mushroom shaped embodiment of the check valve nozzle;
**Fig. 13** is a top view showing the heater clip which used to hold the heating elements against the predelivery chamber;
**Fig. 14** is a side view illustrating a predelivery chamber;
**Fig. 15** is a top cross-sectional view schematically showing a first embodiment of the interior configuration of the predelivery chamber;
**Fig**. **16** is a top cross-sectional view schematically showing a second embodiment of the interior configuration of the predelivery chamber with additional heat-transfer surface area;
**Fig. 17** is a top cross-sectional view schematically showing a third embodiment of the interior configuration of the predelivery chamber with additional surface area;
**Fig. 18** is a top cross-sectional view schematically showing a fourth embodiment of the interior configuration of the predelivery chamber which has a heat retaining central portion;
**Fig. 19** is a front elevational view showing another embodiment of a lotion pump which does not have a temperature select feature;
**Fig. 20** is a top-sectional view of the lotion pump of **Fig. 19** which shows the pumping assembly; and
**Fig. 21** is a side elevational view of a fluid conduit which does not have a check valve and has a positive temperature coefficient (PTC) heater.

### DETAILED DESCRIPTION

The heated lotion pump is generally comprised of a main fluid reservoir, a pumping assembly, and a heater assembly which may be used in conjunction with a predelivery chamber to heat a predetermined volume of lotion. The apparatus is portable, and may be operated either manually (for dispensing), or more commonly operated electrically. The heated lotion pump is reusable, can be filled over and over again with various types of products and can be disassembled for easy cleaning.

The present invention allows delivery of heated lotion on demand in just a few seconds or up to 30 minutes with temperatures varying from 26,7 °C to 82,2 °C depending upon factory installed components and end use. Additionally, the lotion pump has safeguards to prevent overheating and/or electrical shock. In a preferred embodiment of the present invention, a manually controlled thermostat may be used to adjust the lotion temperature to the specification and comfort of the user. A number of temperatures could be utilized which would be selected by way of a hi/low switch, a slider switch, a rotary potentiometer, or the like. Further, a thermal cut-out (TCO), bi-metallic switch or the like can be used as a thermal fuse which trips when the temperature exceeds a predetermined threshold. In other embodiments, a positive temperature coefficient (PTC) which is capped to provide less than 148,9 °C heat could also provide further safeguards.

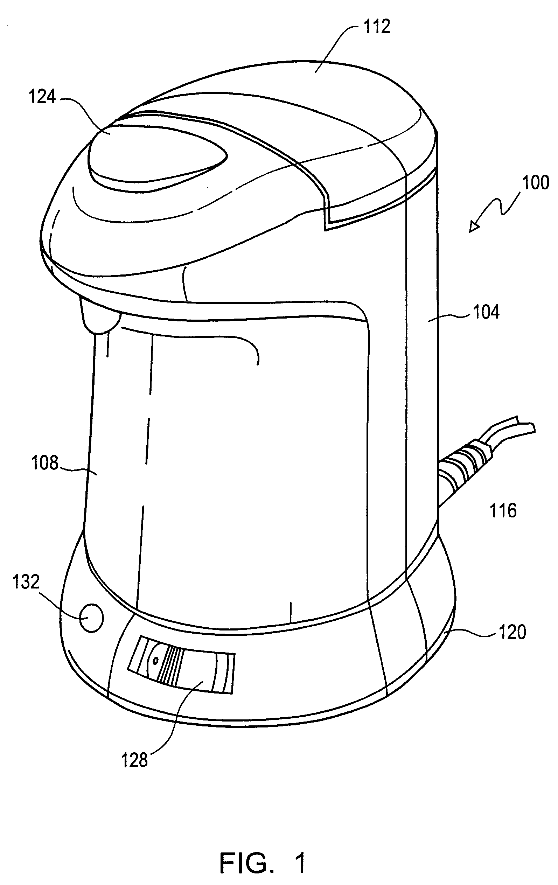

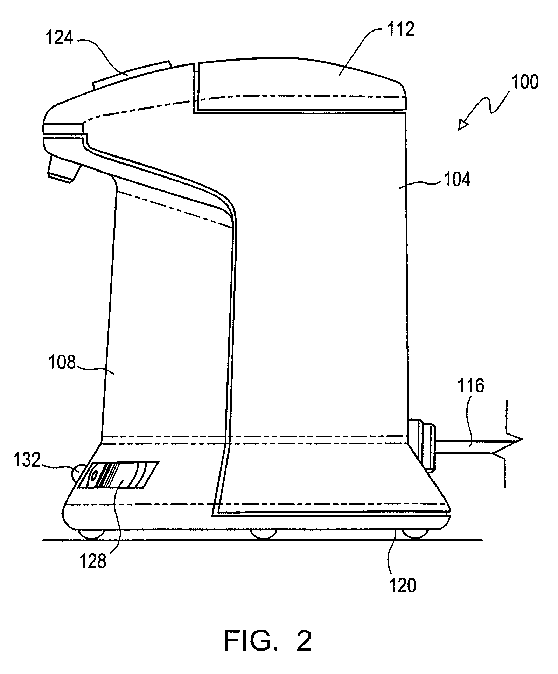

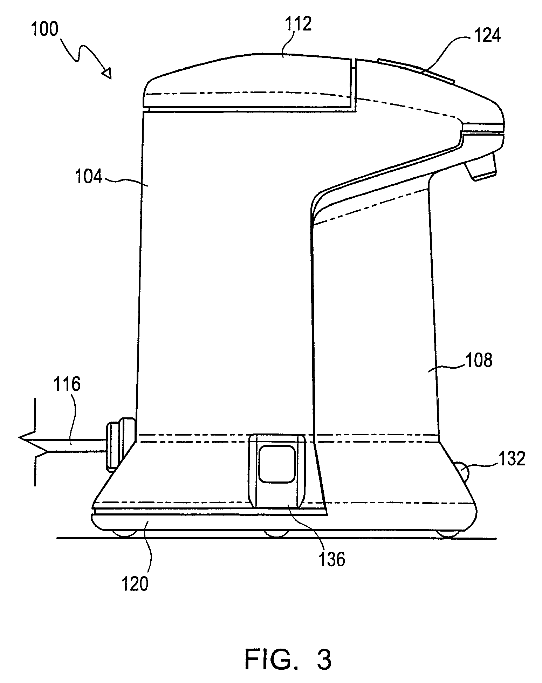

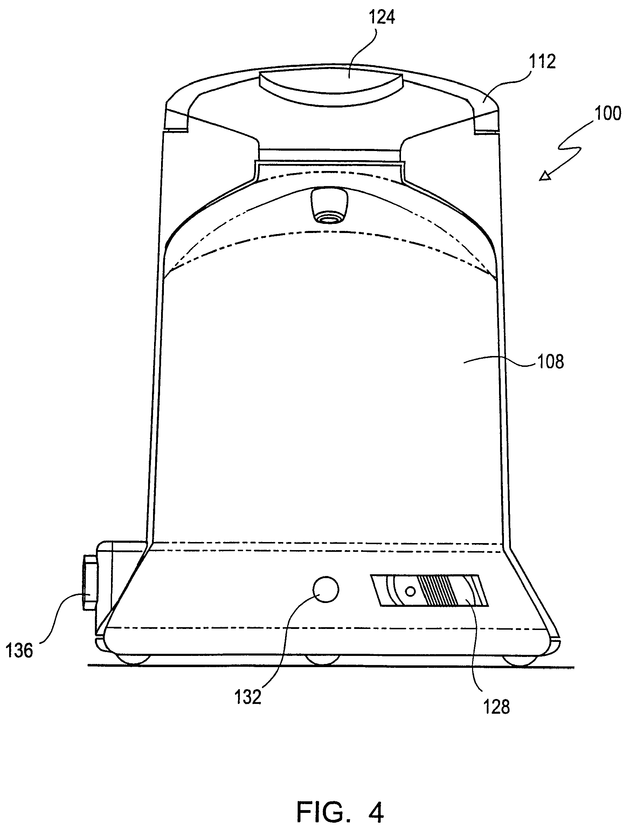

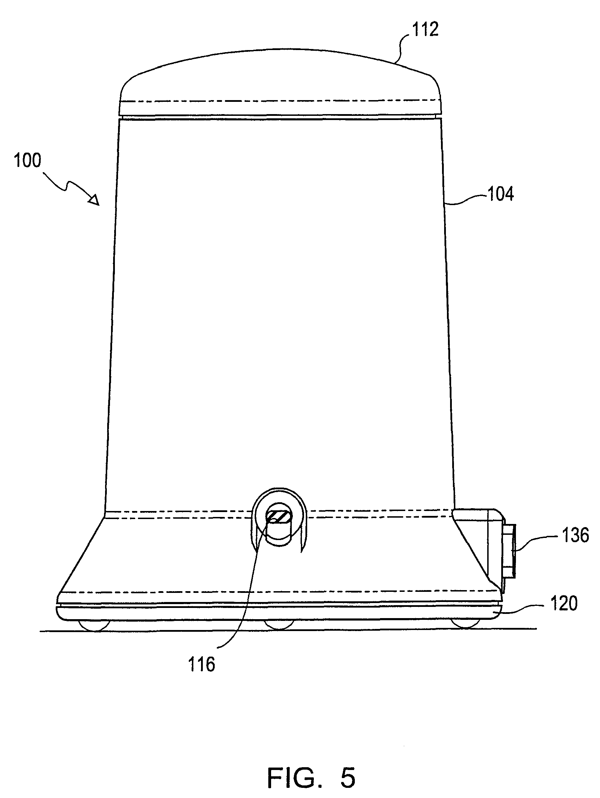

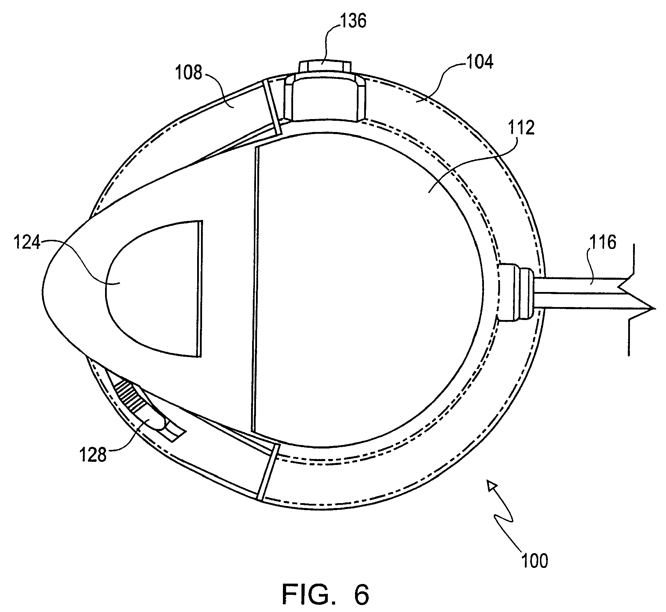

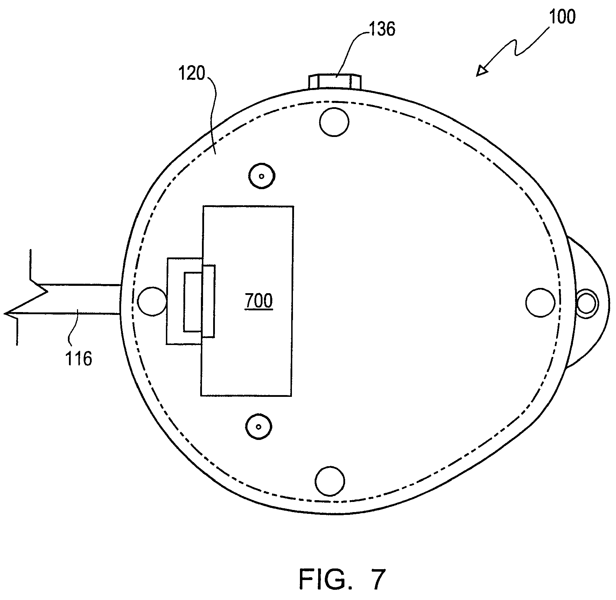

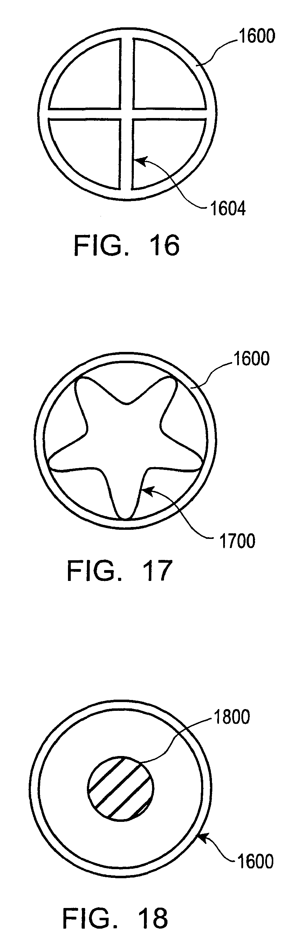

With reference to **Figs. 1-8****,** the heated lotion pump **100** is respectively illustrated in a perspective, right side, left side, front, back, top, bottom, and side-sectional views. The plastic enclosure includes a main portion **104,** a front portion **108** and a exterior top or lid **112.** Preferably, the main body portion **104,** front portion **108** and lid **112** are injection molded with a composite plastic. In this embodiment, the front portion **108** includes a base portion **120.** The main portion **108** may also have a molded-in tank to serve as the main fluid reservoir **800** and which may have various configurations depending on the specific application of the present invention. For example, a masseuse may order an enclosure with a main fluid reservoir **800** that has a much larger storage volume as compared to a consumer model which may need the lotion pump **100** for home use only. The main fluid reservoir **800** generally has a high polish finish and funnels towards an outlay **804** near the bottom where the lotion is directed toward the gear pump spur **808.** Thus, gravity is used to provide the lotion to the feed pump **808,** although alternatively a siphon type feed mechanism could be used. The gear pump spur **808** has two interlocking gears (see **Fig. 16**) which serve to pump the lotion through the fluid conduit. The temperature of the main fluid reservoir **800** is largely unaffected by the heating element and is generally an ambient temperature. In one embodiment, a battery box **700** with, for example, two AA batteries, an electrical outlet **116** and enclosure for the gear pump assembly **812** also are molded into the main body for simplicity and economy. The materials for the enclosure preferably will be ABS plastic in a number 2 finish or polycarbonates for parts exposed to heat, although any numerous types of materials may be used. For parts exposed to the heated lotion, nylon and/or polypropylene is preferred.

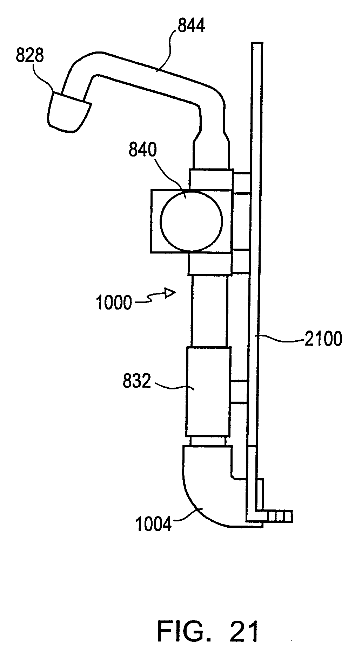

A single injection molded part in the same finish and material as the main body makes up the front portion **108** of the finished unit **100** as well as a bottom portion or base plate **120.** In other embodiments however, the bottom portion **120** could be separate to ease manufacturing. Additionally, a single injection plastic molded cap or lid **112** may be utilized which has the same material and finish of the main body portion **104.** The lid **112** is generally a user removable cover to close the lotion tank **800** and which also permits access for cleaning purposes. The bottom portion **120** of the enclosure may also include one or more leg portions and/or non-skid rubber feet for resting the dispensing unit on furniture. In one aspect of the present invention, an insulating wall **2100** (see **Fig. 21**) could be used to isolate the heater assembly **816** of the product from the main fluid reservoir **800,** to further reduce unintentional heat coupling to the main fluid reservoir **800.** The insulating wall **2100** may also support and attach to the heater assembly **816.**

The tank body **820** is generally plastic, metal or any combination of metals and plastics. Preferably the plastics proximate to the heating area contain a polycarbonate or the like to meet code requirements related to fire or overheating. In some embodiments, the tank **820** may be interchangeable to allow changing of the contents and may include a storage portion to receive a disposable bag and/or yogurt cup type container with a seal that can be pierced by a portion of the pumping/dispensing assembly **100.** Additionally, the tank **820** may have a level indicator and a filling port to quickly allow the addition of new lotion. Furthermore, the tank **820** may have a pressure device to provide better flow in the unit, a preheater and/or a special coupling valve for removal or flow control. Preferably, the tank/body **820** is constructed of a shatter resistant plastic, and holds a volume of between about 57 gr. and 567 gr. of lotion in a consumer design or more in a commercial design.

The pump assembly **812** is used to dispense the lotion from the tank body **820** and may be manually operated or electrically powered. The electric power could be supplied by 120 or 240 V_{AC} power supply, batteries (3 V_{DC}), a 12 V_{DC} power supply, and/or other known power sources. The pump spur **808** is preferably a gear type, but may be an impeller, a diaphragm, a piston, or a roller and tube (no touch) type which could be driven by a rotary motor, piston motor, linear magnetic device or vibrator. One or more check valves **828** could be used to control backflow and prevent air lock and nozzle drip. Furthermore, the pump assembly **812** could have special amounts of insulation to reduce noise. The pump assembly **812** may additionally include numerous disassembly features to allow for cleaning and maintenance.

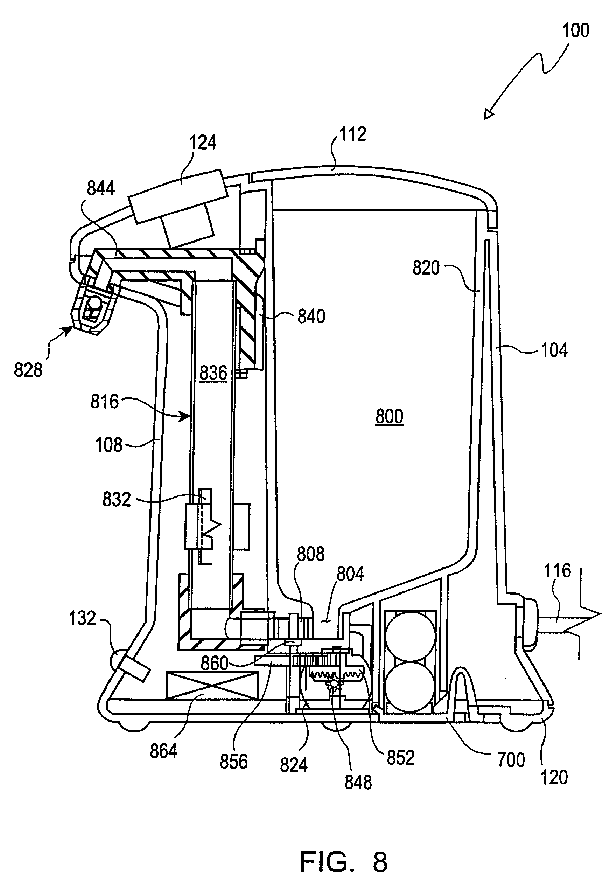

The heating element **832** is a PTC type, a variety of resistance types which may be printed/laminated to a flexible film or fabric, or the like. The heating element **832** preferably is adjacent to a predelivery chamber **836,** i.e., a chamber of a pipe to allow heating only a portion of the lotion which will immediately be dispensed as opposed to heating the total volume of lotion **800** maintained in the tank body **820.** The embodiment in **Fig. 8** shows a resistance type heating element **836** clamped to the predelivery chamber **836.** The shape of the chamber **836** or pipe can be straight or varied to improve efficiency of heat transfer and may contain a baffle system for internal heating. The baffle system would serve to increase the ratio of surface area to chamber volume so that heat transfer is maximized. Additionally, various conducting materials may be used to store heat and make the heat transfer more evenly to the lotion. Accordingly, a heat conducting material which is known in the art such as stainless steel, aluminum with a protective coating and/or other conductive materials could be used. Further, the wall of the predelivery chamber **836** is thin to more easily conduct heat. The heating element **832** is preferably thermostatically controlled and is preferably interactive with the controls for the pump to allow the heating of the lotion to be controlled between a temperature of between about 80° and 180°F. Preferably, when the tank body **820** and/or predelivery chamber **836** is empty, the heating element **832** will automatically shut off to prevent overheating of the unit. Additionally, a circuit breaker, such as a TCO, is provided to prevent electrical overloading of the heater and which may include a fuse to prevent overheating. The heater assembly **816** is additionally insulated for optimum performance and to again prevent overheating of the tank body **820,** pump **812** and/or other components of the lotion pump **100.** After the last activation of the pump, the temperature of the predelivery chamber **836** is maintained for period of time, for example, 20 or more minutes.

A thermal sensor **840** may be utilized to allow the pump to be operational only when the lotion in the predelivery chamber **836** is at its proper delivery temperature. The thermal sensor **840** may be any number of thermostats commonly known in the art, such as a solid state device, thermistor or bi-metallic switch. The thermal sensor **840** works in concert with the heating element **832** under the direction of a control circuit to thermostatically regulate the temperature of the dispensing chamber **836.** Preferably, the range of set temperatures is adjustable. Additionally, the thermal sensor **840** could be monitored to prevent activation of the pump assembly until the lotion is properly heated.

The lotion would preferably be heated "in-line" on its way to the delivery point where the lotion will be delivered at a temperature preferably at about 46,1 °C. Thus the temperature inside the dispensing chamber tube **836** is to be somewhat higher and in the range of between 48,9 °C and 60 °C . The gear pump spur **808** pushes the lotion into the dispensing chamber **836** which has an accommodation on the side for a heating element **840** to be press fitted. Generally, the PTC heating element consumes about 5-40 watts while active. To direct the flow of the heated lotion from the top of the dispensing chamber **836** to the delivery point, the dispensing chamber **836** is fitted with a dispensing spout **844.**

The drive train used for the pump assembly **812** includes molded plastic gears. The gears are preferably made of Delrin™ because of its lubricity and wear resistance properties. Although, other known compositions could also be used. The gears are designed to fit the size and output requirements of the pump assembly **812.** A motor **824** with a pinion gear **848** drives a first gear **852** which drives a second gear **856.** Two pump spur gears **808** are driven by the second gear **856.** An o-ring **860** seals the drive train from the lotion conduit to avoid possible leakage. In a preferred embodiment a check valve **828** may be interconnected to the dispensing spout to prevent lotions from inadvertently dripping during periods of non-use. Additionally, the check valve **828** keeps air from interacting with the lotion in the lotion conduit which keeps the lotion from drying out and possibly plugging the lotion conduit.

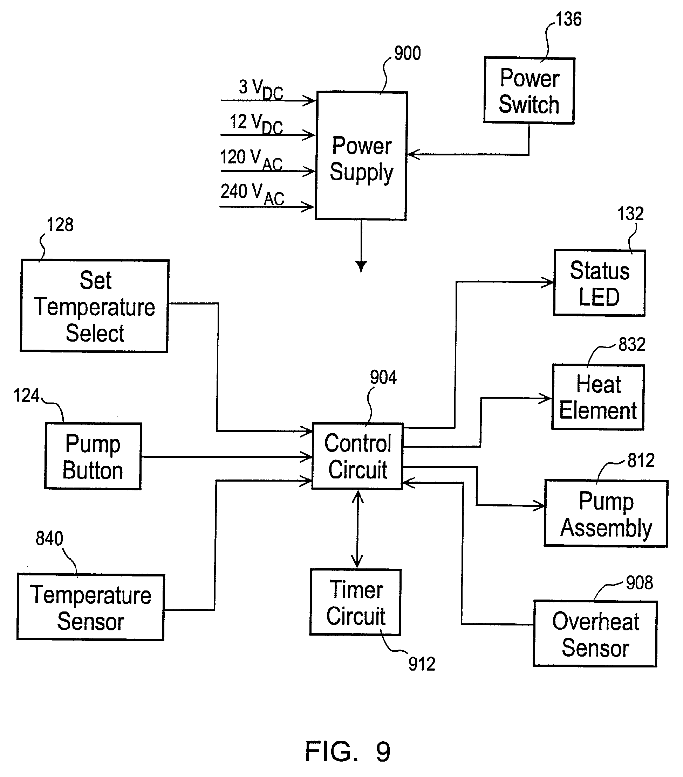

Additionally, there is an accommodation to fit a printed circuit board (PCB) **864** in lower part of the front of the lotion pump **100.** The PCB **864** generally accommodates the electronic functions of the lotion pump **100.** With reference to **Fig. 9****,** a block diagram of the electronic functions is shown. The power switch **136** activates a power supply **900** to condition and convert the input power from any of the various sources to the proper output power. A control circuit **904** manages the operation of the lotion pump **100** which includes such operations as the thermostat function and automatic power-down function.

The thermostat function controls the temperatures of the predelivery chamber **836** and avoids overheating. A set temperature switch **128** allows selecting the desired set point for the lotion. The set temperature switch **128** could be a slider switch allowing a variable range or is preferably a two position switch allowing two set points. In embodiments with a single set temperature, the set temperature switch **128** is not required. The control circuit **904** reads the set temperature select switch **128** to activate the heat element **832** accordingly. To know when the predelivery chamber **836** is adequately heated, the temperature sensor **840** is monitored. The status LED **132** be used to indicate when the desired temperature of the lotion is achieved and/or that the power switch **136** has activated the pump **100.** The lotion pump **100** takes approximately 60 seconds to reach temperature after activation of the power switch **136.** If an overheat sensor **908,** such as a TCO, indicates a thermal run-away condition, the control circuit **904** can deactivate the heat element **832** in order to reduce the risk of fire or bums.

The control circuit **904** also manages the automatic pumping function. When the pump button **124** is activated, the pump assembly **812** is powered which causes flow in the lotion conduit. To prevent not adequately cooled lotion from being dispensed, the control circuit **904** could prevent activation of the pump **812** if the lotion has not reached its set point. In other embodiments however, the pump button **124** could avoid the control circuit **904** and directly activate the pumping assembly. The pump button **124** is preferably a momentary switch that indicates to the control circuit **904** a predetermined volume should be dispensed.

The timer circuit **912** saves energy and prevents continual heating of the lotion in the predelivery chamber **836.** Continual heating can reduce the lotion to its non-volatile constituent parts. The timer is preferably set for 20 or more minutes. After the power switch **136** is activated, the starts counting its 20 minutes, for example. Each depression of the pump button **124** resets the 20 minute timer. If the 20 minutes expires, the lotion pump **100** is automatically powered down. This power down function saves energy and avoids ruining the lotion with excessive heating. Additionally, activating the power switch **136** a second time could immediately power down the lotion pump **100.** The power switch **136** is preferably a momentary switch that activates the lotion pump **100** for a short period of use (e.g., 20 or more minutes).

The momentary power switch **136** effectively is the mechanism which first applies power to the heat element **832.** It is a momentary contact, i.e. touch on/touch off (power relay). Preferably it **136** has a very light touch so that its **136** use does not tend to skid the lotion pump **100** on the support surface and so that lotion saturated hands can activate it **136** without slipping. Although a custom molded square shape is proposed for the power switch **136,** as appreciated by one in the art, the actual geometric configuration of the switch **136** is not important to the functional attributes of the product **100.** The momentary pump button **124** is preferably a soft touch switch that allows power to be delivered to the pump motor **824** as long as it is depressed. No specific switch **124** is proposed or is required although a custom molded "button" which is sealed against lotion intrusion is preferred.

Additionally, the status LED **132** preferably has the ability to glow either a red or green color to respectively indicate that the lotion is being heated and the lotion is ready for use. The color change is accomplished by the reverse polarity of the LED **132.** Although other embodiments could have a single color LED which only indicates power is active. Further, any display which allows display of this information could be used.

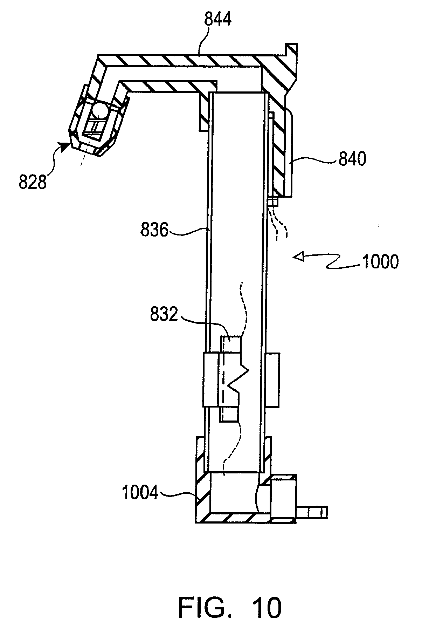

With reference to **Fig. 10****,** a side-sectional view of the fluid conduit **1000** is shown. The fluid conduit **1000** is defined by an elbow joint **1004,** the predelivery chamber **836,** the dispensing spout **844,** and the check valve **828.** The elbow joint **1004** begins with a diameter which is less than the predelivery chamber **836** and the dispensing spout **844** ends with a diameter which is less than the predelivery chamber **836.** The diameter of the predelivery chamber **836** is larger to accommodate a predetermined volume of lotion which is heated. Having a larger diameter predelivery chamber **836** allows for more effcient heating of the lotion with the heating element **832.** The dispensing spout **844** is molded to include a means for attaching the heat sensor **840.** Lotion resistant plastic nylon or polypropylene is preferably used to make the dispensing spout **844** and elbow joint **1004.**

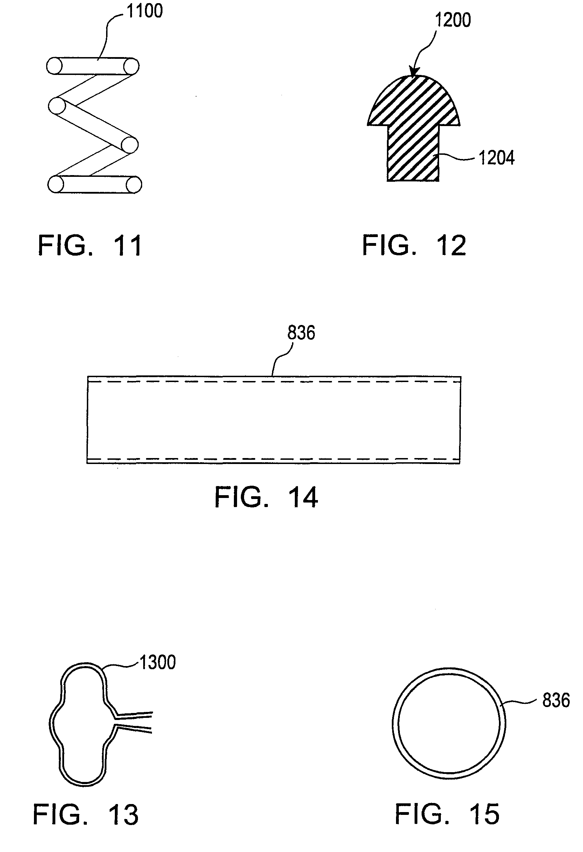

**Figs. 10-12** show two embodiments of the check valve **828** which is used to seal the end of the dispensing spout **844.** In **Fig. 10****,** the check valve is comprised of a ball bearing nozzle and spring and in **Figs. 11** and **12** the check valve is comprised of a mushroom shaped rubber nozzle **1200** and spring **1100.** The nozzle seal prevents air from entering the liquid conduit **1000.** A stem **1204** of the mushroom shaped rubber nozzle **1200** rests inside the spring **1100** to form the valve. While being disassembled, the mushroom shape keeps the spring **1000** and nozzle **1200** together. During dispensing, the pressure created by the pump assembly **812** compresses the spring **1100** by pushing the nozzle **1200** away from the dispensing spout **844.** Once the pressure subsides, the nozzle **1200** presses against the delivery end of the dispensing spout **844** to seal the fluid conduit **1000.**

With reference to **Fig. 13****,** a heater clip **1300** is depicted from a top view. The heater clip **1300** clamps two resistive heating elements to the predelivery chamber **836.** Spring steel is the preferred material for the heater clip **1300,** but other materials and clamps could be used.

**Figs. 14** shows a side view of the predelivery chamber **836.** A single tube of stainless steel or coated aluminum is preferred for the predelivery chamber **836.** Preferably, the chamber **836** can hold a predetermined volume of lotion of 10-20 ml. With reference to **Figs. 15-18****,** sectional views of the predelivery chamber **836** are shown. The various configurations in **Figs. 16-18** maximize the surface area and heat transfer from the metal to the fluid conduit **1000.** The embodiments in **Figs. 16** and **17** have additional surface area **1604,1700** which thermally conducts with the outside of the chamber **1600.** When the outside of the chamber **1600** is heated, the additional surface area **1604,1700** conducts this heat to the interior of the chamber more efficiently than the embodiment in **Fig. 15****,** for example. The embodiment in **Fig. 18** has a heat retaining core **1800** which retains heat to more quickly bring lotion entering the chamber **836** to the set point temperature.

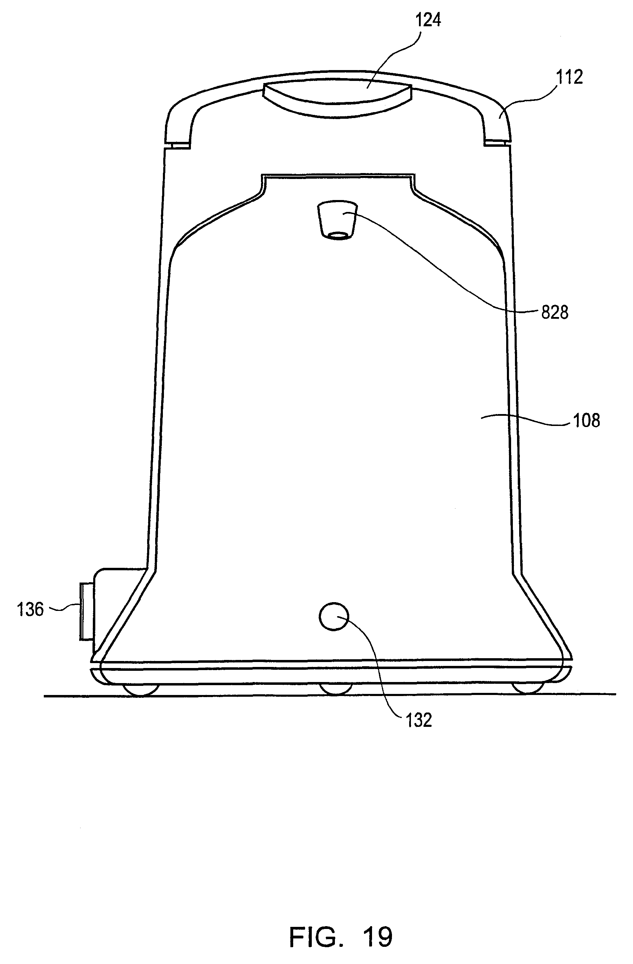

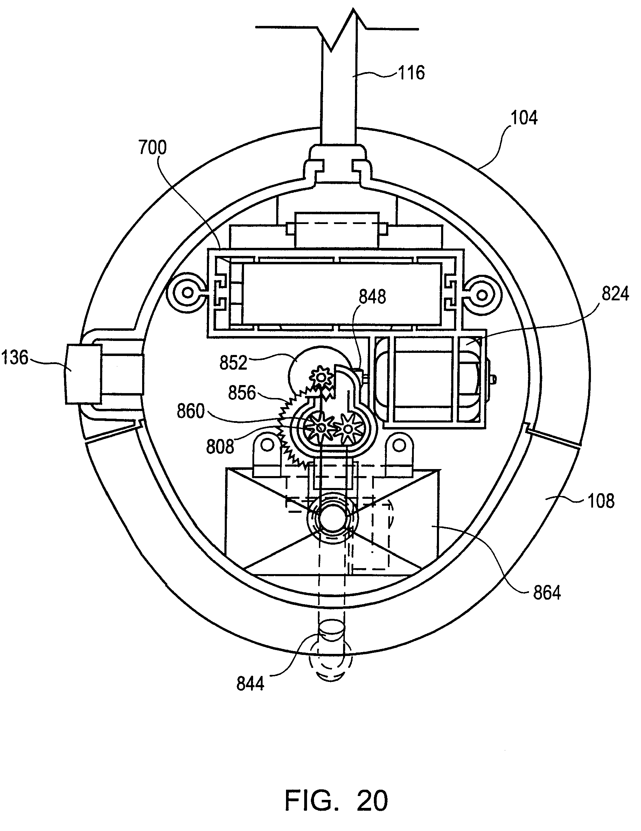

With reference to **Figs. 19-21****,** another embodiment of the invention is shown. This embodiment has neither a set temperature select button **128** nor a check valve **828.** Accordingly, only one predetermined set point is available and air can enter the fluid conduit **1000.** Referring specifically to **Fig. 20****,** a cross-section which reveals the gear pump spurs **808** is illustrated. Next, **Fig. 21** shows the fluid conduit **1000** attached to an insulating wall **2100.** The insulating wall **2100** helps shield the main fluid reservoir **800** from the heating elements **832.** The absence of a check valve **828** allows the lotion to at least partially drain from the predelivery chamber **836** back into the main fluid reservoir **800.** The embodiment in **Fig. 21** uses a PTC heater as the heating element **832.**

The above discussion generally discussed dispensing of body lotions, however other fluids (e.g., moisturizers, shaving cream or hair conditioners), oils (e.g., massage oil), food products (e.g., cheese, syrup or chocolate), and other items which are commonly used in households and require heating in small portions could also be dispensed. Any liquid which has substantial non-volatile constituent parts which will not evaporate is a candidate for this invention. In other words, liquids which would tend to concentrate if the solvents contained therein evaporate would benefit most from this invention. For example, liquids such as tap water, salt water, or relatively pure alcohol would not have substantial non-volatile constituent components.

Even though the temperature sensor is shown outside the predelivery chamber, other embodiments could embed the sensor inside the predelivery chamber. Integrating the temperature sensor in this way would provide for more accurate measurements.

While various embodiments of the present invention have been described in detail, it is apparent that modifications and adaptations of those embodiments will occur to those skilled in the art.

## Claims

1. A fluid pump and delivery system for heating and dispensing a viscous fluid which includes substantial non-volatile constituent parts, comprising:
a main fluid reservoir (800) which is substantially unheated;
a predelivery chamber (836);
a pumping assembly (812) for dispensing the viscous fluid from the main fluid reservoir into the predelivery chamber (836);
a heating assembly (832) having a heating element coupled to the predelivery chamber;
a dispensing spout (844) which dispenses the viscous fluid; and
a power button (124) coupled to the heating assembly which activates the heating assembly upon demand, wherein the viscous fluid stored in the main fluid reservoir is transferred to the dispensing spout upon receiving heat energy within the predelivery chamber.

2. The system of Claim 1, further comprising a timer which powers-down the heating assembly after a period of nonuse.

3. The system of Claim 1, further comprising a control circuit which thermostatically controls the temperature of the viscous fluid in the predelivery chamber.

4. The system of Claim 1, wherein the heating assembly includes a temperature sensor which allows feedback on a temperature of the viscous fluid.

5. The system of Claim 1, wherein the pumping assembly includes:
a gear pump spur;
a motor; and
a drive train including a plurality of gears, wherein the motor is interconnected to the drive train which is interconnected to the gear pump spur.

6. The system of Claim 1, wherein the main fluid reservoir is a disposable container.

7. The system of Claim 1, having a temperature sensor which allows feedback on a temperature of the viscous fluid;
a control circuit which thermostatically controls the temperature of the viscous fluid in the predelivery chamber;
an overheat sensor which powers-down the heating assembly if a temperature reaches a predetermined temperature;
a timer which powers-down the heating assembly after a period of nonuse;
and
a fluid conduit which includes the predelivery chamber and a dispensing spout, wherein a first internal diameter of at least a portion of the dispensing spout is less than a second internal diameter of at least a portion of the predelivery chamber.

8. A method for heating and dispensing a viscous fluid which includes substantial non-volatile constituent parts, comprising the steps of:
storing the viscous fluid in a main fluid reservoir at an ambient temperature;
pumping a portion of the viscous fluid into a predelivery chamber;
heating the portion of the viscous fluid in the predelivery chamber beyond the ambient temperature;
dispensing the portion of the heated viscous fluid stored in the predelivery chamber through a dispensing spout; and
discontinuing the heating step after a predetermined time period following the dispensing step.

9. The method of Claim 8, further comprising the step of sealing an end of the dispensing spout near a delivery point with a check valve.

10. The method of Claim 8, wherein the heating and dispensing steps are battery powered.

11. The method of Claim 8, wherein the pumping step is performed electrically.

## Patentansprüche

1. Fluid-Pump- und Ausgabesystem zum Erwärmen und Ausgeben eines im Wesentlichen nichtflüchtige Bestandteile enthaltenden viskosen Fluids mit:
einem Fluid-Hauptreservoir (800), das im Wesentlichen unbeheizt ist;
einer Ausgabe-Vorkammer (836);
einer Pumpanordnung (812) zum Ausgeben des viskosen Fluids aus dem Fluid-Hauptreservoir (800) in die Ausgabe-Vorkammer (836);
einer Heizanordnung (832) mit einem Heizelement, das mit der Ausgabe-Vorkammer (836) gekoppelt ist;
einem Ausgabeausfluss (844), mit dem das viskose Fluid ausgegeben wird; und
einem Strom-Einschalttaster (124), der mit der Heizanordnung (832) gekoppelt ist und die Heizanordnung nach Bedarf aktiviert, wobei, wenn die Ausgabe-Vorkammer (836) Wärmeenergie aufnimmt, das im Fluid-Hauptreservoir (800) vorgehaltene viskose Fluid an den Ausgabeausfluss (844) übertragen wird.

2. System nach Anspruch 1, weiterhin mit einem Zeitgeber, der die Heizanordnung nach einem Nichtgebrauchsintervall abschaltet.

3. System nach Anspruch 1, weiterhin mit einer Steuerschaltung, die die Temperatur des viskosen Fluids in der Ausgabe-Vorkammer thermostatisch steuert.

4. System nach Anspruch 1, bei dem die Heizanordnung einen Temperatursensor aufweist, der eine Rückkopplung der Temperatur des viskosen Fluids erlaubt.

5. System nach Anspruch 1, bei dem die Pumpanordnung aufweist:
ein Pumpen-Geradzahnrad;
einen Motor; und
einen Antriebszug mit einer Vielzahl von Zahnrädern, wobei der Motor mit dem Antriebszug und dieser mit dem Pumpen-Geradzahnrad verbunden ist.

6. System nach Anspruch 1, bei dem das Fluid-Hauptreservoir ein Wegwerfbehälter ist.

7. System nach Anspruch 1 mit,
einem Temperaturensor, der eine Rückkopplung der Temperatur des viskosen Fluids erlaubt;
einer Steuerschaltung, die die Temperatur des viskosen Fluids in der Ausgabe-Vorkammer thermostatisch steuert;
einem Überhitzungssensor, der die Heizanordnung abschaltet, wenn eine Temperatur einen vorbestimmten Temperaturwert erreicht;
einem Zeitgeber, der die Heizanordnung nach einem Nichtgebrauchsintervall abschaltet; und
einem Fluid-Kanal, der die Ausgabe-Vorkammer und einen Ausgabeausfluss umfasst, wobei ein erster Innendurchmesser mindestens eines Teils des Ausgabeausflusses kleiner ist als ein zweiter Innendurchmesser mindestens eines Teils der Ausgabe-Vorkammer.

8. Verfahren zum Erwärmen und Ausgeben eines im Wesentlichen nichtflüchtige Bestandteile enthaltenden viskosen Fluids mit folgenden Schritten:
Vorhalten des viskosen Fluids in einem Fluid-Hauptreservoir bei einer Umgebungstemperatur;
Pumpen eines Teils des viskosen Fluids in die Ausgabe-Vorkammer;
Erwärmen eines Teils des viskosen Fluids in der Ausgabe-Vorkammer über die Umgebungstemperatur hinaus;
Ausgeben eines Teils des in der Ausgabe-Vorkammer befindlichen erwärmten viskosen Fluids durch einen Ausgabeausfluss; und
Abbrechen des Erwärmungsschritts nach Ablauf einer vorbestimmten Zeitspanne nach dem Ausgabeschritt.

9. Verfahren nach Anspruch 8 weiterhin mit dem Schritt, ein Ende des Abgabeausflusses nahe einem Ausgabepunkt mit einem Rückschlagventil zu verschließen.

10. Verfahren nach Anspruch 8, bei dem der Erwärmungs- und der Ausgabeschritt batteriegespeist erfolgen.

11. Verfahren nach Anspruch 8, bei dem der Pumpschritt elektrisch erfolgt.

## Revendications

1. Pompe à fluide et système de distribution pour chauffer et distribuer un fluide visqueux qui inclut des parties constitutives non volatiles substantielles, comprenant :
un réservoir de fluide principal (800) qui est sensiblement non chauffé ;
une chambre de pré-distribution (836) ;
un ensemble de pompage (812) pour distribuer le fluide visqueux à partir du réservoir de fluide principal dans la chambre de pré-distribution (836) ;
un ensemble de chauffage (832) ayant un élément de chauffage couplé à la chambre de pré-distribution ;
un bec de distribution (844) qui distribue le fluide visqueux ; et
un bouton d'alimentation (124) couplé à l'ensemble de chauffage qui active l'ensemble de chauffage sur demande, dans lequel le fluide visqueux stocké dans le réservoir de fluide principal est transféré vers le bec de distribution à réception d'énergie thermique à l'intérieur de la chambre de pré-distribution.

2. Système selon la revendication 1, comprenant en outre un compteur de temps qui met hors tension l'ensemble de chauffage après une période d'inutilisation.

3. Système selon la revendication 1, comprenant en outre un circuit de commande qui commande thermostatiquement la température du fluide visqueux dans la chambre de pré-distribution.

4. Système selon la revendication 1, dans lequel l'ensemble de chauffage inclut un capteur de température qui permet une rétroaction sur une température du fluide visqueux.

5. Système selon la revendication 1, dans lequel l'ensemble de pompage inclut :
un renvoi de pompe à engrenages ;
un moteur ; et
une transmission incluant une pluralité d'engrenages, dans lequel le moteur est interconnecté à la transmission qui est interconnectée au renvoi de pompe à engrenages.

6. Système selon la revendication 1, dans lequel le réservoir de fluide principal est un récipient jetable.

7. Système selon la revendication 1, ayant un capteur de température qui permet une rétroaction sur une température du fluide visqueux ;
un circuit de commande qui commande thermostatiquement la température du fluide visqueux dans la chambre de pré-distribution ;
un capteur de surchauffe qui met hors tension l'ensemble de chauffage si une température atteint une température prédéterminée ;
un compteur de temps qui met hors tension l'ensemble de chauffage après une période d'inutilisation ;
et
une conduite de fluide qui inclut la chambre de pré-distribution et un bec de distribution, dans lequel un premier diamètre interne d'au moins une portion du bec de distribution est inférieur à un second diamètre interne d'au moins une portion de la chambre de pré-distribution.

8. Procédé pour chauffer et distribuer un fluide visqueux qui inclut des parties constitutives non volatiles substantielles, comprenant les étapes de :
stocker le fluide visqueux dans un réservoir de fluide principal à une température ambiante ;
pomper une portion du fluide visqueux dans une chambre de pré-distribution ;
chauffer la portion du fluide visqueux dans la chambre de pré-distribution au-delà de la température ambiante ;
distribuer la portion du fluide visqueux chauffée stocké dans la chambre de pré-distribution à travers un bec de distribution ; et
interrompre l'étape de chauffage après une période de temps prédéterminée suivant l'étape de distribution.

9. Procédé selon la revendication 8, comprenant en outre l'étape de rendre étanche une extrémité du bec de distribution près d'un point de distribution avec un clapet antiretour.

10. Procédé selon la revendication 8, dans lequel les étapes de chauffage et de distribution sont alimentées par batterie.

11. Procédé selon la revendication 8, dans lequel l'étape de pompage est réalisée électriquement.
